# EUROPÄISCHE PATENTANMELDUNG

(11) **EP 4 851 923 A1**
(43) Veröffentlichungstag der Anmeldung: **09.12.2026**
(21) Anmeldenummer: 25180072.8
(22) Anmeldetag: 02.06.2025
(51) Int. Cl.: G06T 7/64, G06T 7/00

(54) **VERFAHREN ZUR REIFENZUSTANDSERMITTLUNG FÜR EIN NUTZFAHRZEUG**

(71) Anmelder: Deere & Company, Moline, IL 61265 (US)
(72) Erfinder: FLEMMING, AXEL, 68163 Mannheim (DE); KANICHE, ONKAR, 68163 Mannheim (DE); DHONDE, AMOL, 68163 Mannheim (DE)
(74) Vertreter: Dehnhardt, Florian Christopher

(57) **Zusammenfassung**

Die Erfindung betrifft ein Verfahren zur Reifenzustandsermittlung für ein Nutzfahrzeug (32), insbesondere einen landwirtschaftlichen Traktor (30), bei dem auf Veranlassung einer Steuereinheit (16) mittels einer Bilderfassungseinrichtung (14) eine Außenkontur (58) eines luftgefüllten Reifens (50) sowie eine Innenkontur (60) des Reifens (50) entlang einer Radfelge (62) ermittelt wird, wobei von der Steuereinheit (16) ein oberer radialer Abstand (hᵤ) und/oder ein unterer radialer Abstand (hₗ) der beiden Konturen (58, 60) zueinander bestimmt wird, um daraus einen auf einen lastfreien Zustand des Reifens (50) bezogenen ersten Reifenradius (R_{free}) und/oder einen auf einen lastbedingt komprimierten Zustand des Reifens (50) bezogenen zweiten Reifenradius (R_{staticload}) zu ermitteln.

## Beschreibung

Die Erfindung betrifft ein Verfahren zur Reifenzustandsermittlung für ein Nutzfahrzeug, insbesondere einen landwirtschaftlichen Traktor.

Eine betriebsbedingte Abnutzung des Reifenprofils wie auch ein übermäßiger Reifenlatsch führen nicht nur zu Veränderungen des Abrollumfangs luftgefüllter Reifen, sondern auch zu unerwünschten Einflüssen auf das Fahr- und Stabilitätsverhalten eines damit ausgestatteten Nutzfahrzeugs, ohne dass die Ursache für den Fahrer ohne weiteres ersichtlich wäre.

Angesichts dessen ist es Aufgabe der vorliegenden Erfindung, ein Verfahren der eingangs genannten Art anzugeben, das eine einfache und verlässliche Überprüfung des aktuellen Reifenzustands erlaubt.

Diese Aufgabe wird durch ein Verfahren zur Reifenzustandsermittlung für ein Nutzfahrzeug mit den Merkmalen des Patentanspruchs 1 gelöst.

Bei einem Verfahren zur Reifenzustandsermittlung für ein Nutzfahrzeug, insbesondere einen landwirtschaftlichen Traktor, wird auf Veranlassung einer Steuereinheit mittels einer Bilderfassungseinrichtung eine Außenkontur eines luftgefüllten Reifens sowie eine Innenkontur des Reifens entlang einer Radfelge ermittelt, wobei von der Steuereinheit ein oberer radialer Abstand hᵤ und/oder ein unterer radialer Abstand hₗ der beiden Konturen zueinander bestimmt wird, um daraus einen auf einen lastfreien Zustand des Reifens bezogenen ersten Reifenradius R_{free} und/oder einen auf einen lastbedingt komprimierten Zustand des Reifens bezogenen zweiten Reifenradius R_{staticload} zu ermitteln.

Die Konturermittlung erfolgt seitens der Bilderfassungseinrichtung im Wege der Bildverarbeitung berührungslos, wobei der aus dem unteren radialen Abstand hₗ abgeleitete erste Reifenradius R_{staticload} einen Rückschluss auf den im Reifenaufstandsbereich auftretenden Reifenlatsch einerseits sowie der aus dem oberen radialen Abstand hᵤ abgeleitete zweite Reifenradius R_{free} eine Aussage hinsichtlich verschleißbedingter Veränderungen des Abrollumfangs des Reifens und damit einer betriebsbedingten Abnutzung des Reifenprofils andererseits zulässt.

Die Bestimmung des oberen bzw. unteren radialen Abstands hᵤ bzw. hₗ erfolgt hierbei im höchsten bzw. tiefsten Punkt entlang des Außenumfangs des zu überprüfenden Reifens. Dabei entspricht der zweite Reifenradius R_{staticload} im Wesentlichen dem um den jeweiligen Reifenlatsch verringerten ersten Reifenradius R_{free}. Die Konturermittlung wird bevorzugt unter statischen Bedingungen bei stillstehendem Nutzfahrzeug durchgeführt.

Die von der Steuereinheit abgeleiteten Reifenradien R_{free}, R_{static-load} wie auch sich daraus ergebende weitere Informationen können an eine elektronische Kontrolleinheit (ECU) des Nutzfahrzeugs zum Zwecke der weiteren Verarbeitung und/oder Visualisierung über eine fahrzeugfeste Nutzerschnittstelle übermittelt werden. Bei der Nutzerschnittstelle handelt es sich beispielsweise um ein von einem Graphical User Interface (GUI) des Nutzfahrzeugs umfasstes Display.

Das Nutzfahrzeug ist insbesondere als landwirtschaftlicher Traktor ausgebildet, grundsätzlich kann es sich jedoch auch um ein beliebiges anderes Nutzfahrzeug mit luftgefüllten Reifen aus dem Land-, aber auch Forst- oder Baumaschinenbereich handeln. Vorteilhafte Weiterbildungen des erfindungsgemäßen Verfahrens gehen aus den Unteransprüchen hervor.

Vorzugsweise weist die Bildererfassungseinrichtung eine in einem mobilen Endgerät (Smartphone, Tablett, etc.) eingebaute Kamera auf, wobei die beiden Konturen von der (ebenfalls in das mobile Endgerät eingebauten) Steuereinheit durch Extraktion äußerer und innerer Kantenbegrenzungen des Reifens aus einem mittels der Kamera erzeugten binären Gradientenbild insbesondere durch Anwendung einer Hough-Transformation ermittelt werden. Das Verfahren ist in Form einer entsprechenden App auf dem mobilen Endgerät installiert, sodass auch für Laien jederzeit eine unkomplizierte Überprüfung des aktuellen Reifenzustands möglich ist. In einem solchen Fall können die abgeleiteten Reifenradien R_{free}, R_{staticload} wie auch sich daraus ergebende weitere Informationen über eine von dem mobilen Endgerät umfasste Nutzerschnittstelle in Gestalt eines berührungsempfindlichen Displays visualisiert sowie über eine Wifi-Schnittstelle an die elektronische Kontrolleinheit des landwirtschaftlichen Nutzfahrzeugs und/oder über eine GSM-Schnittstelle an einen externen Datenserver übertragen werden, auf den ein Servicedienstleister zu Zwecken der Ferndiagnose Zugriff hat.

Des Weiteren ist es denkbar, dass von der Steuereinheit der ermittelte erste Reifenradius R_{free} mit einem vorgegebenen Bezugswert verglichen sowie nach Maßgabe des Vergleichsergebnisses über eine (der vorgenannten) Nutzerschnittstelle(n) die Ausgabe einer Verschleißinformation veranlasst wird. Dies erlaubt eine kontinuierliche Überwachung des Verschleißzustands des Reifenprofils, wobei je nach Zunahme der Abweichung die Dringlichkeit der Verschleißinformation bis hin zur Ausgabe einer Fahrerwarnung erhöht werden kann.

Zusätzlich oder alternativ kann von der Steuereinheit das Verhältnis zwischen dem ermittelten zweiten Reifenradius R_{staticload} und dem ermittelten ersten Reifenradius R_{free} gebildet sowie mit einem vorgegebenen Grenzwert verglichen werden, um bei Überschreiten des Grenzwerts über eine (der vorgenannten) Nutzerschnittstelle(n) die Ausgabe eines Fahrzeugstabilitätshinweises zu veranlassen. Dessen Ausgabe kann dergestalt erfolgen, dass der Fahrer darüber informiert wird, eine entsprechende Verringerung bzw. Anpassung der Ballastierung des Nutzfahrzeugs und/oder Erhöhung des Reifenfülldrucks vorzunehmen, was zum Beispiel durch entsprechende Betätigung einer vorhandenen Reifendruckfüllanlage erfolgen kann.

Eine weitere Möglichkeit sieht vor, dass der ermittelte zweite Reifenradius R_{staticload} zur Korrektur einer raddrehzahlbasiert ermittelten Fahrtgeschwindigkeit des Nutzfahrzeugs herangezogen wird. Die Genauigkeit von auf der Kenntnis der solchermaßen ermittelten Fahrtgeschwindigkeit beruhenden Fahrzeugsystemen, wie beispielsweise einer Antriebsschlupfregelung, wird so maßgeblich verbessert.

Das erfindungsgemäße Verfahren zur Reifenzustandsermittlung für ein Nutzfahrzeug wird im Folgenden anhand der beigefügten Zeichnungen näher erläutert. Es zeigt:
- Fig. 1: ein schematisch dargestelltes Ausführungsbeispiel des erfindungsgemäßen Verfahrens zur Reifenzustandsermittlung in Form eines Flussdiagramms,
- Fig. 2: ein im Wege der Bildverarbeitung erzeugtes Abbild eines von einem Nutzfahrzeug umfassten Reifens, und
- Fig. 3: eine beispielhaft dargestellte Anordnung zur Durchführung des erfindungsgemäßen Verfahrens mit einer Bilderfassungseinrichtung und einer Steuereinheit als Bestandteil eines mobilen Endgeräts.

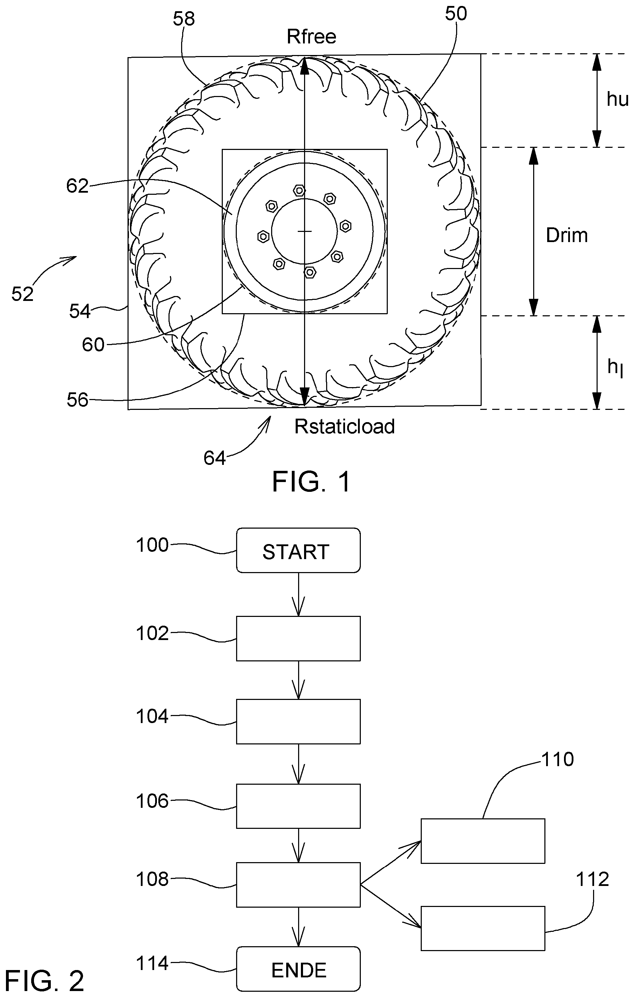

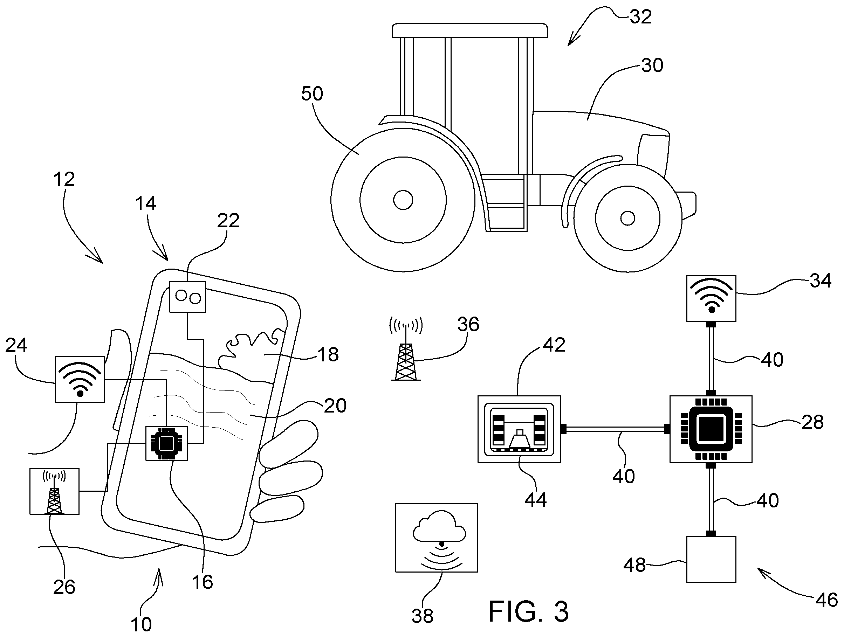

Fig. 1 zeigt ein schematisch dargestelltes Ausführungsbeispiel des erfindungsgemäßen Verfahrens in Form eines Blockdiagramms, wobei zunächst auf die zu dessen Durchführung vorgesehene Anordnung gemäß Fig. 3 eingegangen werden soll.

Die in ein mobiles Endgerät 10 integrierte Anordnung 12 umfasst neben einer Bilderfassungseinrichtung 14 eine von einer CPU gebildete Steuereinheit 16, die mit einer als berührungsempfindliches Display 18 ausgebildeten Nutzerschnittstelle 20 des mobilen Endgeräts 10 in Verbindung steht. Bei dem mobilen Endgerät 10 handelt es sich um ein herkömmliches Smartphone oder Tablett. Das erfindungsgemäße Verfahren ist als entsprechende App auf dem mobilen Endgerät 10 installiert.

Hierbei weist die Bildererfassungseinrichtung 14 eine auf der Rückseite des mobilen Endgeräts 10 eingebaute sowie über das berührungsempfindliche Display 18 bedienbare Kamera 22 auf. Eine Wifi- bzw. GSM-Schnittstelle 24, 26 dient der Herstellung einer drahtlosen Datenaustauschverbindung mit einer elektronischen Kontrolleinheit (ECU) 28 eines als landwirtschaftlicher Traktor 30 ausgebildeten Nutzfahrzeugs 32 über eine zugehörige weitere Wifi-Schnittstelle 34 bzw. über ein Mobilfunknetz 36 mit einem externen Datenserver 38, auf den ein Servicedienstleister zu Zwecken der Ferndiagnose Zugriff hat. Die Kontrolleinheit 28 kommuniziert hierbei über einen CAN-Bus 40 mit einer fahrzeugfesten Nutzerschnittstelle 42. Bei der fahrzeugfesten Nutzerschnittstelle 42 handelt es sich um ein von einem Graphical User Interface (GUI) des landwirtschaftlichen Traktors 30 umfasstes Display 44. Angedeutet sind in Fig. 3 weitere Fahrzeugsysteme 46, beispielhaft eine Antriebsschlupfregelung 48.

Unter Bezugnahme auf das in Fig. 1 wiedergegebene Flussdiagramm wird das erfindungsgemäße Verfahren von der Steuereinheit 16 des mobilen Endgeräts 10 beim Aufrufen der entsprechenden App in einem Startschritt 100 initiiert.

Daraufhin wird in einem ersten Schritt 102 von der Steuereinheit 16 die (in der Regel serienmäßig vorhandene) Kamerafunktion des mobilen Endgeräts 10 geöffnet sowie der Bediener in Form entsprechender Anweisungen aufgefordert, den beispielhaft an einer Hinterachse des landwirtschaftlichen Traktors 30 zu überprüfenden Reifen 50 mit der Kamera 22 anzuvisieren. Dies kann derart erfolgen, dass auf dem Display 18 eingeblendete Hilfs- und/oder Schnittlinien in Übereinstimmung mit den Umrissen des Reifens 50 zu bringen sind. Sobald dies von der Steuereinheit 16 erkannt wird, wird die Kamera 22 selbsttätig ausgelöst. Das dabei aufgenommene farbige Abbild des Reifens 50 wird anschließend von der Steuereinheit 16 in einem Zwischenschritt in ein damit korrespondierendes Graustufenbild umgewandelt, um anschließend ein in Fig. 1 gezeigtes binäres Gradientenbild 52 zu erzeugen.

In einem zweiten Schritt 104 ermittelt die Steuereinheit 16 aus dem mittels der Kamera 22 erzeugten binären Gradientenbild 52 durch Extraktion äußerer und innerer Kantenbegrenzungen 54, 56 eine Außenkontur 58 sowie eine Innenkontur 60 des Reifens 50 entlang einer Radfelge 62, wobei von der Steuereinheit 16 ein oberer radialer Abstand hᵤ und/oder ein unterer radialer Abstand hₗ der beiden Konturen 58, 60 zueinander bestimmt wird. Dies erfolgt im Wege der Bildverarbeitung durch Anwendung einer Hough-Transformation.

Davon ausgehend ermittelt die Steuereinheit 16 in einem dritten Schritt 106 einen auf einen lastfreien Zustand des Reifens 50 bezogenen ersten Reifenradius R_{free} und/oder einen auf einen lastbedingt komprimierten Zustand des Reifens 50 bezogenen zweiten Reifenradius R_{staticload}, ${R}_{free} \left[cm\right] = k ⋅ \left(\frac{{D}_{rim} \left[pixel\right]}{2}+{h}_{u}\left[pixel\right]\right) ,$ ${R}_{staticload} \left[cm\right] = k ⋅ \left(\frac{{D}_{rim} \left[pixel\right]}{2}+{h}_{l}\left[pixel\right]\right) ,$ mit $k = \frac{{D}_{r} \left[cm\right]}{{D}_{rim} \left[pixel\right]} .$

Hierbei ist k ein Umrechnungsfaktor zwischen den Maßeinheiten pixel und cm. Die Größe der Pixel richtet sich hierbei nach der verwendeten Kamera 22, genauer gesagt dem darin verbauten CMOS- oder CCD-Sensorchip. Bei dem Felgendurchmesser Dᵣ handelt es sich um einen für die betreffende Radfelge 62 festen und daher als bekannt vorgesetzten Wert. Der Wert des Felgendurchmessers Dᵣᵢₘ wird hingegen von der Steuereinheit 16 anhand der ermittelten Innenkontur 60 abgeleitet.

Hierbei lässt der aus dem unteren radialen Abstand hₗ abgeleitete erste Reifenradius R_{staticload} einen Rückschluss auf den im Reifenaufstandsbereich 64 auftretenden Reifenlatsch einerseits sowie der aus dem oberen radialen Abstand hᵤ abgeleitete zweite Reifenradius R_{free} eine Aussage hinsichtlich verschleißbedingter Veränderungen des Abrollumfangs des Reifens 50 und damit einer betriebsbedingten Abnutzung des Reifenprofils andererseits zu.

Wie in Fig. 1 zu erkennen ist, erfolgt die Bestimmung des oberen bzw. unteren radialen Abstands hᵤ bzw. hₗ im höchsten bzw. tiefsten Punkt entlang des Außenumfangs des zu überprüfenden Reifens 50. Dabei entspricht der zweite Reifenradius R_{staticload} im Wesentlichen dem um den jeweiligen Reifenlatsch verringerten ersten Reifenradius R_{free}.

In einem vierten Schritt 108 werden die im dritten Schritt 106 von der Steuereinheit 16 abgeleiteten Reifenradien R_{free}, R_{staticload} über die von dem mobilen Endgerät 10 umfasste Nutzerschnittstelle 20 visualisiert sowie über die miteinander kommunizierenden Wifi-Funkschnittstellen 24, 34 an die Kontrolleinheit 28 des landwirtschaftlichen Traktors 30 zum Zwecke der weiteren Verarbeitung und/oder Visualisierung über die fahrzeugfeste Nutzerschnittstelle 42 übermittelt und/oder über die GSM-Schnittstelle 26 sowie das Mobilfunknetz 36 an den externen Datenserver 38 übertragen.

Darüber hinaus wird die Kenntnis der Reifenradien R_{free}, R_{staticload} zur Bereitstellung von sich daraus ergebenden weiteren Informationen genutzt.

So ist zunächst in einem ersten Nebenschritt 110 vorgesehen, dass von der Steuereinheit 16 der ermittelte erste Reifenradius R_{free} mit einem vorgegebenen Bezugswert verglichen sowie nach Maßgabe des Vergleichsergebnisses über eine (der vorgenannten) Nutzerschnittstelle(n) 20, 42 die Ausgabe einer Verschleißinformation veranlasst wird. Dies erlaubt eine kontinuierliche Überwachung des Verschleißzustands des Reifenprofils, wobei je nach Zunahme der Abweichung die Dringlichkeit der Verschleißinformation bis hin zur Ausgabe einer Fahrerwarnung erhöht wird.

Zusätzlich oder alternativ wird von der Steuereinheit 16 in einem zweiten Nebenschritt 112 das Verhältnis zwischen dem ermittelten zweiten Reifenradius R_{staticload} und dem ermittelten ersten Reifenradius R_{free} gebildet sowie mit einem vorgegebenen Grenzwert verglichen, um bei Überschreiten des Grenzwerts über eine (der vorgenannten) Nutzerschnittstelle(n) 20, 42 die Ausgabe eines Fahrzeugstabilitätshinweises zu veranlassen. Dessen Ausgabe erfolgt dergestalt, dass der Fahrer darauf hingewiesen wird, eine entsprechende Verringerung bzw. Anpassung der Ballastierung des landwirtschaftlichen Traktors 30 und/oder Erhöhung des Reifenfülldrucks vorzunehmen, was zum Beispiel durch entsprechende Betätigung einer gegebenenfalls vorhandenen Reifendruckfüllanlage erfolgt.

Der ermittelte zweite Reifenradius R_{staticload} wird zudem ausgehend von der im vierten Schritt 108 erfolgten Übertragung an die Kontrolleinheit 28 zur Korrektur einer raddrehzahlbasiert ermittelten Fahrtgeschwindigkeit des landwirtschaftlichen Traktors 30 herangezogen. Die Genauigkeit von auf der Kenntnis der solchermaßen ermittelten Fahrtgeschwindigkeit beruhenden Fahrzeugsystemen 46, wie beispielsweise der in Fig. 3 angedeuteten Antriebsschlupfregelung 48, wird so maßgeblich verbessert.

Anschließend wird das Verfahren von der Steuereinheit 16 in einem Schlussschritt 114 beendet.

Im Allgemeinen wird die vorstehend beschriebene Überprüfung des aktuellen Reifenzustands jeweils für alle vier Reifen des landwirtschaftlichen Traktors 30 hintereinander durchgeführt.

## Patentansprüche

1. Verfahren zur Reifenzustandsermittlung für ein Nutzfahrzeug, bei dem auf Veranlassung einer Steuereinheit (16) mittels einer Bilderfassungseinrichtung (14) eine Außenkontur (58) eines luftgefüllten Reifens (50) sowie eine Innenkontur (60) des Reifens (50) entlang einer Radfelge (62) ermittelt wird, wobei von der Steuereinheit (16) ein oberer radialer Abstand (hᵤ) und/oder ein unterer radialer Abstand (hₗ) der beiden Konturen (58, 60) zueinander bestimmt wird, um daraus einen auf einen lastfreien Zustand des Reifens (50) bezogenen ersten Reifenradius (R_{free}) und/oder einen auf einen lastbedingt komprimierten Zustand des Reifens (50) bezogenen zweiten Reifenradius (R_{staticload}) zu ermitteln.

2. Verfahren nach Anspruch 1, **dadurch gekennzeichnet, dass** die Bildererfassungseinrichtung (14) eine in einem mobilen Endgerät (10) eingebaute Kamera (22) aufweist, wobei die beiden Konturen (58, 60) von der Steuereinheit (16) durch Extraktion äußerer und innerer Kantenbegrenzungen (54, 56) des Reifens (50) aus einem mittels der Kamera (22) erzeugten binären Gradientenbild (52) insbesondere durch Anwendung einer Hough-Transformation ermittelt werden.

3. Verfahren nach Anspruch 1 oder 2, **dadurch gekennzeichnet, dass** von der Steuereinheit (16) der ermittelte erste Reifenradius (R_{free}) mit einem vorgegebenen Bezugswert verglichen sowie nach Maßgabe des Vergleichsergebnisses über eine Nutzerschnittstelle (20, 42) die Ausgabe einer Verschleißinformation veranlasst wird.

4. Verfahren nach wenigstens einem der vorhergehenden Ansprüche, **dadurch gekennzeichnet, dass** von der Steuereinheit (16) das Verhältnis zwischen dem ermittelten zweiten Reifenradius (R_{staticload}) und dem ermittelten ersten Reifenradius (R_{free}) gebildet sowie mit einem vorgegebenen Grenzwert verglichen werden, um bei Überschreiten des Grenzwerts über eine Nutzerschnittstelle (20, 42) die Ausgabe eines Fahrzeugstabilitätshinweises zu veranlassen.

5. Verfahren nach wenigstens einem der vorhergehenden Ansprüche, **dadurch gekennzeichnet, dass** der ermittelte zweite Reifenradius (R_{staticload}) zur Korrektur einer raddrehzahlbasiert ermittelten Fahrtgeschwindigkeit des Nutzfahrzeugs (32) herangezogen wird.
